# EUROPÄISCHE PATENTSCHRIFT

(11) **EP 0 614 931 B1**
(45) Veröffentlichungstag und Bekanntmachung des Hinweises auf die Patenterteilung: **28.05.1997**
(21) Anmeldenummer: 94102782.3
(22) Anmeldetag: 24.02.1994
(51) Int. Cl.: C08J 9/08, C08L 75/04

(54) **Verfahren zur Herstellung von Formkörpern aus Polyurethanschaumstoffen**
Process for the preparation of moulded articles from polyurethane foams
Procédé de préparation d'articles moulés à partir de mousses de polyuréthane

(30) Priorität: 09.03.1993 DE 4307384
(43) Veröffentlichungstag der Anmeldung: 14.09.1994
(73) Patentinhaber: BAYER AG, 51368 Leverkusen (DE)
(72) Erfinder: Neuhaus, Alfred, D-51371 Leverkusen (DE); Haas, Peter, Dr., D-42781 Haan (DE); Daneshvar, Majid, Dr., D-51467 Bergisch Gladbach (DE)

(56) Entgegenhaltungen:
- EP-A- 0 158 212
- EP-A- 0 372 292
- EP-A- 0 409 199
- EP-A- 0 476 337
- DE-A- 1 804 362
- DE-A- 3 607 447

## Beschreibung

Die Erfindung betrifft ein Verfahren zur Herstellung von Formkörpern aus Polyurethanschaumstoffen mit kompakter Oberfläche, bei welchem als Treibmittel spezielle organische Carbonsäuren eingesetzt werden.

Die Herstellung von Formkörpern aus Polyurethanschaumstoffen mit kompakter Oberfläche durch Formverschäumung ist grundsätzlich bekannt (z.B. DE-AS 1 196 864). Sie erfolgt durch Formverschäumung eines reaktions- und schaumfähigen Gemischs aus organischen Polyisocyanaten, Verbindungen mit gegenüber Isocyanatgruppen reaktionsfähigen Gruppen und den üblichen Hilfs- und Zusatzmitteln, wobei man in die Form eine größere Menge an reaktionsfähigem Gemisch einträgt, als zum Ausfüllen des Formvolumens durch freie Verschäumungen erforderlich wäre. Durch geeignete Wahl der Ausgangskomponenten, insbesondere durch geeignete Wahl ihres Molekulargewichts und ihrer Funktionalität ist es dabei möglich, sowohl weiche als auch halbharte als auch harte Formkörper herzustellen. Die dichte Außenhaut wird hierbei dadurch erreicht, daß man einerseits in die Form eine größere Menge an schaumfähigem Gemisch einträgt, als zum Ausfüllen des Formvolumens durch freie Verschäumung erforderlich wäre und andererseits als Treibmittel chlorkohlenwasserstoffe verwendet, die an der Forminnenwand unter den vorherrschenden Temperatur- und Druckbedingungen kondensieren, so daß die Treibreaktion an der Forminnenwand zum Stillstand kommt und eine kompakte Außenhaut entsteht.

Zur Herstellung von Polyurethan(PUR)schaumstoffen werden neben Wasser Fluorchlorkohlenwasserstoffe oder Hydrogen fluorchlorkohlenwasserstoffe als Treibmittel verwendet. Durch diese bisher üblichen Treibmittel können eine Reihe von Eigenschaften hervorragend erfüllt werden, wobei insbesondere mit Fluortrichlormethan eine Reihe von Schaumstoffen unterschiedlicher Eigenschaften hergestellt werden können. Die Gruppe der sogenannten FCKW-Treibmittel erweist sich jedoch aus ökologischen Gründen als problematisch. Als Alternative wird versucht, ganz auf Wasser als Treibmittel umzustellen. Die Verwendung von Wasser als Treibmittel für halbharte bis weiche PUR-Schaumstoffe mit einer kompakten Außenhaut ergibt jedoch Probleme, die der Verwendung von Wasser enge Grenzen setzen. Gravierende Nachteile für eine einwandfreie Verarbeitung mit Wasser getriebener Formkörper sind:

### 1. Fließverhalten

Durch das zusätzliche Wasser wird der Viskositätsaufbau stark beschleunigt, so daß die Rohstoffmischung die notwendige Beweglichkeit einbüßt. Hier muß dann mit entsprechend hohen Füllmengen gearbeitet werden, um die Form auszufüllen.

### 2. Geschlossenzelligkeit

Durch Wasser getriebene Formkörper neigen zu ausgeprägter geschlossener Zellstruktur. Hierdurch resultiert ein Druckaufbau, ein Nachdrücken sowie ein Aufplatzen der Formteile. Aus diesen Gründen sind solchen, durch Wasser getriebenen, halbharten Formteilen in ihren Rohdichten enge Grenzen gesetzt. So sind wegen der beschriebenen Effekte Rohdichten von 500-600 kg/m³ schon als kritisch anzusehen, wobei Wasser in einer Menge von 0,6-0,8 Gew.-Teilen eingesetzt wurde.

### 3. Struktur der Deckschicht

Durch Wasser getriebene, halbharte Formteile zeigen keine zellfreie Außenhaut, so daß bei Anwendungen eine zusätzliche Lackschicht erforderlich ist.

Eine Vielzahl von Treibmittelempfehlungen sind bisher bekannt geworden. So verwendet man in der Patentschrift FR 2 509 317 Ameisensäure und Wasser zur Herstellung von Blockweichschaumstoffen sowie harten Schaumstoffen. In EP-A-0 154 669 werden spezielle Amine und Säuren (Ameisensäure) zur Herstellung von Weichschaumstoffen eingesetzt. In EP-A-372 292 werden als Treibmittel Carbonsäuren, bevorzugt Milchsäure, zur Herstellung von harten Schaumstoffen mit kompakter Oberfläche verwendet.

Diese neueren bekannten Treibmittel sollten zumindest ähnlich gute Eigenschaften wie das bisher verwendete Monofluortrichlormethan aufweisen und entsprechend gute Schaumstoffe bilden. Für die Treibmittel gilt daher folgendes Anforderungsprofil:
a) große Gasausbeute, entsprechend einer niedrigen Rohdichte
b) problemloses Fließen
c) geringer Viskositätsaufbau im schäumenden Reaktionsgemisch
d) dimensionsstabile Formteile
e) hoher Verdichtungsgradient ohne Aufplatzen
f) lunkerfreie Oberfläche
g) schneller Druckabbau im Formteil
h) unbedenkliche Spaltprodukte

Aus verschiedenen Gründen führen die aus dem Stand der Technik bekannten Lösungen für bestimmte Schaumtypen nicht zum Ziel.

So zeigt die als Treibmittel eingesetzte Ameisensäure kettanabbrechenden Charakter und liefert als Spaltprodukt Kohlenmonoxid.

Zur Herstellung von weichen Formteilen mit kompakter Außenhaut ergeben sich Probleme mit den aus EP-A-372 292 bekannten Treibmitteln.

Aufgabe war es daher, ein Verfahren zur Verfügung zu stellen, das es gestattet, weiche Formteile aus urethanschaumstoffen mit kompakter Oberfläche herzustellen, und das die o.g. Nachteile nicht aufweist.

Diese Aufgabe konnte überraschenderweise mit dem erfindungsgemäßen Verfahren unter Verwendung ganz bestimmter organischer Carbonsäuren als Treibmittel gelöst werden.

Gegenstand der Erfindung ist ein Verfahren zur Herstellung von Formkörpern einer Rohdichte von mindestens 150 kg/m³ aus Polyurethanschaumstoffen mit einer kompakten Oberfläche durch Formverschäumung eines Reaktionsgemisches aus
a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) urethan- und harnstoffbildende Aktivatoren,
d) gegebenenfalls weiteren Hilfs- und Zusatzmitteln
e) gegebenenfalls Wasser und
f) organischen Treibmitteln
unter Einhaltung einer Isocyanatkannzahl von 75 bis 200, weches dadurch gekennzeichnet ist, daß als Treibmittel f) Verbindungen der allgemeinen Formel I

HOOC-R-COOH I

wobei
- R: eine CH₂-Gruppe oder eine CH=CH-Gruppe darstellt,
und/oder der Formel II 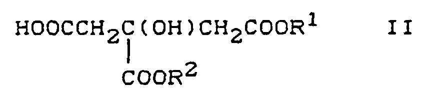 in welcher
- R¹ und R²: unabhängig voneinander einen Wasserstoffrest oder einen Alkylrest mit 1 bis 6 Kohlenstoffatomen darstellen, dessen Wasserstoffatome teilweise durch OH-Gruppen substituiert sein können,
eingesetzt werden.

Mit den Verbindungen der Formel I und II lassen sich eine hohe Gasausbeute, ein unerwartet schneller Druckabbau im Formteil sowie eine gute Hautbildung in den Randzonen erreichen.

Bevorzugt werden Malonsäure, Citronensäure, Citronensäurepropylester, Citronensäurehydroxypropylester, Maleinsäure oder Gemische davon als Treibmittel eingesetzt.

Bevorzugt werden als Treibmittel Verbindungen der Formel II eingesetzt, in denen R¹ einen Alkylrest mit 1 bis 6 Kohlenstoffatomen, dessen Wasserstoffatome teilweise durch OH-Gruppen substituiert sein können, und R² einen Wasserstoffrest darstellen.

Die als Treibmittel f) eingesetzten Carbonsäuren können selbstverständlich auch in Form ihrer Salze, insbesondere in Form ihrer Ammoniumsalze, die gegenüber Isocyanaten reaktionsfähige Gruppen enthalten können, eingesetzt werden.

Vorzugsweise werden die Monoestercitrate als Treibmittel eingesetzt.

Bevorzugt werden die Treibmittel f) in Mengen von 0,1 bis 5 Gew.-Teilen, bezogen auf die Komponente b) eingesetzt.

Als weitere Hilfsmittel d) werden vorzugsweise im erfindungsgemäßen Verfahren randzonenvergrößernde Zeolith- und/oder Silikagel-Typen eingesetzt.

Als Polyisocyanat-Komponente a) kommen beliebige aromatische Polyisocyanate mit einem NCO-Gehalt von mindestens 20 Gew.-% in Betracht. Beispiele hierfür sind 2,4-Diisocyanatotoluol, dessen technischen Gemische mit 2,6-Diisocyanatotoluol oder, bevorzugt, die bekannten Polyisocyanate oder Polyisocyanatgemische der Diphenylmethanreihe wie sie beispielsweise durch Phosgenierung von Anilin/Formaldehyd-Kondensaten und gegebenenfalls destillative Aufarbeitung der Phosgenierungsprodukte zugänglich sind. Diese für das erfindungsgemäße Verfahren besonders gut geeigneten Polyisocyanate oder Polyisocyanatgemische weisen im allgemeinen einen Gehalt an Diisocyanatodiphenylmethan-Isomeren von 50 bis 100 Gew.-% auf und bestehen im wesentlichen zum Rest aus höherfunktionellen Homologen dieser Diisocyanate. Die in diesen Gemischen vorliegenden Diisocyanate bestehen im wesentlichen aus 4,4'-Diisocyanatodiphenylmethan in Abmischung mit bis zu 60 Gew.-%, bezogen auf die Gesamtmenge der Diisocyanate, an 2,4'-Diisocyanatodiphenylmethan und gegebenenfalls geringen Mengen an 2,2'-Diisocyanatodiphenylmethan. Auch Urethan-, Carbodiimid- oder Allophanat-modifizierte Derivate dieser Polyisocyanate können als Polyisocyanatkomponente a) eingesetzt werden.

Bei der Reaktivkomponente b) handelt es sich um mindestens eine organische Verbindung mit mindestens zwei gegenüber Isocyanatgruppen reaktionsfähigen Gruppen. Im allgemeinen handelt es sich um Gemische von mehreren derartigen Verbindungen. Vorzugsweise handelt es sich bei den einzelnen Verbindungen der Komponente b) um die aus der Polyurethanchemie an sich bekannten organischen Polyhydroxylverbindungen.

In Betracht kommen insbesondere die an sich bekannten Polyhydroxypolyether des Molekulargewichtsbereichs 1000 bis 10 000, vorzugsweise 1500 bis 6000, die pro Molekül mindestens 2, vorzugsweise 2 bis 6, besonders bevorzugt 2 bis 3 Hydroxylgruppen der genannten Art aufweisen. Derartige Polyhydroxypolyether werden in an sich bekannter Weise durch Alkoxylierung von geeigneten Startermolekülen erhalten. Geeignete Startermoleküle sind spielsweise Wasser, Propylenglykol, Glycerin, Trimethylolpropan, Sorbit, Rohrzucker, Aminoalkohole wie Ethanolamin oder Diethanolamin oder aliphatische Amine wie n-Hexylamin oder 1,6-Diaminohexan bzw. beliebige Gemische derartiger Startermoleküle. Geeignete Alkoxylierungsmittel sind insbesondere Propylenoxid und gegebenenfalls Ethylenoxid, welches im Gemisch mit Propylenoxid oder auch separat in getrennten Reaktionsschritten während der Alkoxylierungsreaktion zur Anwendung gelangen kann. Die OH-Zahl dieser Reaktivkomponenten liegt bei 20 bis 149, bevorzugt 25 bis 100, besonders bevorzugt 25 bis 75.

Auch die an sich bekannten Modifizierungsprodukte derartiger Polyetherpolyole, d.h. die bekannten Pfropfpolyether auf Basis der beispielhaft genannten einfachen Polyetherpolyole bzw. die bekannten Polyadditionsprodukte als Füllstoffe enthaltende Polyetherpolyole, beispielsweise Polyhydrazocarbonamide als disperse Füllstoffe enthaltende Polyetherpolyole sind geeignet.

Auch die üblichen Polyesterpolyole des Molekulargewichtsbereichs 1000 bis 10.000, vorzugsweise 1500 bis 4000, die pro Molekül mindestens zwei, vorzugsweise 2 bis 6, besonders bevorzugt 2 bis 3 Hydroxylgruppen aufweisen, sind als Komponente b) bzw. als Teil der Komponente b) geeignet. Geeignete Polyesterpolyole sind die an sich bekannten Umsetzungsprodukte von überschüssigen Mengen an mehrwertigen Alkoholen der als Startermoleküle bereits beispielhaft genannten Art mit mehrbasischen Säuren wie beispielsweise Bernsteinsäure, Adipinsäure, Phthalsäure, Tetrahydrophthalsäure oder beliebigen Gemischen derartiger Säuren. Die OH-Zahl liegt zwischen 25 und 149, bevorzugt 40 bis 120.

Auch niedermolekulare Polyhydroxylverbindungen, d.h. solche eines Molekulargewichtsbereichs von 62 bis 999 sind als Teil der Komponente b) geeignet. Hierzu gehören die aus der Polyurethanchemie an sich bekannten niedermolekularen, Hydroxylgruppen aufweisenden Kettenverlängerungsmittel bzw. Vernetzer wie Alkanpolyole der bereits oben als Startermoleküle beispielhaft genannten Art oder auch niedermolekulare Polyetherpolyole, wie sie durch Alkoxylierung dieser Startermoleküle zugänglich sind. Bevorzugt sind Glykole wie z.B. Ethylenglykol, Butylenglykol sowie Ethanolamin, Methylethanolamin.

Die Komponente b) besteht, wie bereits ausgeführt, vorzugsweise aus organischen Polyhydroxylverbindungen bzw. aus Gemischen organischer Polyhydroxylverbindung der beispielhaft genannten Art, wobei als Komponente b) auch Gemische der beispielhaft genannten höhermolekularen Polyhydroxylverbindungen mit den beispielhaft genannten niedermolekularen Polyhydroxylverbindungen in Betracht kommen, die als Kettenverlängerer mitverwendet werden können. Ihr Anteil liegt bei 0,5 bis 15, bevorzugt 1 bis 10 Gew.-Teile, bezogen auf 100 Gew.-Teile der Komponente b).

Die Reaktivkomponente b) kann, zumindest zum Teil, auch aus Aminogruppen aufweisenden Verbindungen bestehen.

Hierzu gehören sowohl Aminopolyether des Molekulargewichtsbereichs 1000 bis 12000, vorzugsweise 2000 bis 8000 mit mindestens zwei aliphatisch und/oder aromatisch gebundenen primären und/oder sekundären, vorzugsweise primären Aminogruppen als auch niedermolekulare Polyamine des Molekulargewichtsbereichs 60 bis 999 als mitzuverwendende Kettenverlängerer.

Zu den Aminopolyethern gehören solche der in EP-B-00 81 701, US-PS 3 654 370, US-PS 3 155 728, US-PS 3 236 895, US-PS 3 808 250, US-PS 3 975 428, US-PS 4 016 143, US-PS 3 865 791 oder DE-OS 2 948 491 genannten Art. Zu den niedermolekularen Polyaminen gehören beispielsweise aliphatische Polyamine wie Ethylendiamin, 1,6-Diaminohexan oder vorzugsweise aromatische Polyamine, insbesondere alkylsubstituierte Phenylendiamine wie 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan oder beliebige Gemische derartiger Verbindungen.

Bei der Durchführung des erfindungsgemäßen Verfahrens können die genannten erfindungswesentlichen organischen Verbindungen der Formeln I und II auch in Kombination mit untergeordneten Mengen an anderen, an sich bekannten chemischen oder physikalischen Treibmitteln verwendet werden. Hierzu gehören Wasser, in den Ausgangskomponenten physikalisch gelöste Gase wie Luft, Kohlendioxid oder Stickstoff, Pyrokohlensäureester, stickstoffabspaltende Verbindungen. Die Mitverwendung von derartigen weiteren Treibmitteln ist jedoch, von der oftmals nicht zu vermeidenden Mitverwendung von Wasser und eingerührter Luft abgesehen, nicht bevorzugt. Diese anderen Treibmittel machen im allgemeinen, falls sie überhaupt anwesend sind, maximal 50, vorzugsweise maximal 25 Gew.-% aller im Reaktionsgemisch vorliegenden Treibmittel aus.

Bei den mitzuverwendenden Aktivatoren c) handelt es sich bevorzugt um die an sich bekannten, die Isocyanat-Polyadditionsreaktion beschleunigenden Katalysatoren zur Harnstoff- und Urethanbildung wie tert. Amine wie Triethylendiamin, N,N-Dimethylbenzylamin oder N,N-Dimethylcyclohexylamin bzw. metallorganische Verbindungen, insbesondere Zinnverbindungen wie Zinn(II)-octoat oder Dibutylzinndilaurat.

Gegebenenfalls mitzuverwendende Hilfs- und Zusatzstoffe d) sind beispielsweise die an sich bekannten Schaumstabilisatoren, beispielsweise jene auf Basis von Polyether-modifizierten Polysiloxanen sowie auch mitzuverwendende Kettenverlängerer, welche in Mengen von 0,5 bis 15, bevorzugt 1 bis 10 Gew.-Teile, bezogen auf 100 Gew.-Teile der Reaktivkomponente b) verwendet werden.

Weitere, gegebenenfalls mitzuverwendende Hilfs- und Zusatzmittel d) sind innere Formtrennmittel, beispielsweise solche der in EP-B-00 81 701, US-PS 3 726 952, GB-PS 1 365 215, US-PS 4 098 731, US-PS 4 058 492, DE-OS 2 319 648, US-PS 4 033 912, US-PS 4 024 090, DE-OS 2 427 273 oder US-PS 4 098 731 beschriebenen Art.

Zur Durchführung des erfindungsgemäßen Verfahrens wird im allgemeinen so vorgegangen, daß die Ausgangskomponenten b) bis f) vorab miteinander vermischt und anschließend mit der Polyisocyanatkomponente a) vereinigt werden. Die letztgenannte Durchmischung erfolgt beispielsweise unter Verwendung von Rührwerksmischern oder vorzugsweise unter Verwendung der üblichen Hochdruck-Mischaggregate, wie sie üblicherweise zur Herstellung von Polyurethanschaumstoffen verwendet werden. Unmittelbar nach der Herstellung des Reaktionsgemisches erfolgt die Befüllung der Form, wobei die Menge des in die Form eingetragenen Reaktionsgemisches der angestrebten Rohdichte der Formkörper angepaßt wird. Neben diesem Einstufen-Verfahren kann das erfindungsgemäße Verfahren auch nach dem Semiprepolymerprinzip durchgeführt werden. Hierbei wird die Gesamtmenge der Polyisocyanatkomponente a) mit einem Teil der Komponente b), beispielsweise unter Einhaltung eines NCO/OH-Äquivalentverhältnisses von mindestens 3:1, vorzugsweise mindestens 8:1 zu einem NCO-Semiprepolymeren umgesetzt, welches anschließend mit einem Gemisch der verbleibenden Komponenten b) bis f) zur Reaktion gebracht wird. Dabei können selbstverständlich zur Herstellung der NCO-Semiprepolymeren Polyhydroxylverbindungen b) eingesetzt werden, die von den Polyhydroxylverbindungen b), die anschließend mit den NCO-Semiprepolymeren abgemischt werden, verschieden sind.

Bei allen Varianten des erfindungsgemäßen Verfahrens werden die Mengenverhältnisse der Einzelkomponenten so gewählt, daß eine Isocyanatkennzahl von 75 bis 200, vorzugsweise 80 bis 150 vorliegt. Unter "Isocyanatkennzahl" ist hierbei der Quotient der Anzahl der cyanatgruppen geteilt durch die Anzahl der gegenüber Isocyanatgruppen reaktionsfähigen Gruppen multipliziert mit 100 zu verstehen.

Die Rohdichte der Formkörper liegt bei mindestens 120, vorzugsweise bei 150 bis 1000 kg/m³.

Im allgemeinen beträgt die Temperatur der zur Anwendung gelangenden Formwerkzeuge mindestens 30°C, vorzugsweise mindestens 40°C. Die Innenwände der Werkzeuge können erforderlichenfalls vor der Befüllung mit an sich bekannten äußeren Formtrennmitteln beschichtet werden.

Das erfindungsgemäße Verfahren gestattet ohne Mitverwendung der bislang stets eingesetzten Fluorchlorkohlenwasserstoffe die Herstellung von hochwertigen Polyurethanschaumstoff-Formteilen einer kompakten, blasenfreien Oberfläche. Das erfindungsgemäße Verfahren eignet sich insbesondere zur Herstellung von weichen bis halbharten Integralschaumstoffen mit einer kompakten Oberfläche, wie sie in der Automobil- und Möbelindustrie in großem Umfang zum Einsatz gelangen.

Überraschenderweise zeigen lediglich die als Treibmittel f) eingesetzten, organischen Carbonsäuren der Formel I und II die gegenüber dem Stand der Technik herausragenden Effekte. Die in EP-A-240 715 benutzte Ölsäure z.B. zeigt diese guten Treibmitteleffekte nicht; im übrigen wurde hier mit Monofluortrichlormethan getrieben. Die in EP-A-240 715 aufgezählten Trennmittelkomponenten wie Essigsäure, Propionsäure, Bernsteinsäure, Glutarsäure, Adipinsäure wirken als Treibmittel deutlich schlechter, während Oxalsäure Kohlenmonoxid liefert. Auch die aus EP-A-372 292 bekannte Milchsäure als Treibmittel ist den erfindungsgemäßen Treibmitteln überraschenderweise unterlegen. Entsprechendes gilt für die Treibmittel aus US-PS 5 162 385 wie Essigsäure, Propionsäure und Ricinolsäure. Auch die in DE-A 4 028 211 verwendeten Carbonsäuretreibmittel führen zusammen mit den dort eingesetzten Polyisocyanuratkatalysatoren und den speziellen Reaktivkomponenten nicht zu weichen bis halbharten Polyurethanschaumstoff-Formteilen mit kompakter Oberfläche.

Die Erfindung soll anhand der nachfolgenden Beispiele näher erläutert werden.

### Beispiele

### Ausgangsmaterialien:

### Komponente a):

Polyisocyanat auf der Basis polymeren Diphenylmethandiisocyanats mit einem NCO-Gehalt von 28,5 %. (Desmodur 44P90® der Bayer AG)

### Polykomponente b):

b1) Desmophen 3900® (Bayer AG) ist ein auf Trimethylolpropan gestartetes Polyetherpolyol auf der Basis Propylenoxid und Ethylenoxid mit vorwiegend primären OH-Endgruppen und einer OH-Zahl von 35, Molekulargewicht 4800.
b2) Bayfit 0549® (Bayer AG) ist ein auf Propylenglykol gestartetes Polyetherpolyol auf der Basis Propylenoxid und Ethylenoxid mit vorwiegend primären OH-Endgruppen und einer OH-Zahl von 28, Molekulargewicht 6000.

### Komponente c):

UL1® (Witco Corp.) ist ein Aktivator der Struktur Dibutylzinn-bis-laurylmercaptid

### Komponente d):

d1) Ethanolamin
d2) Ethylenglykol

Die in Tabelle 1 angegebenen Polyolmischungen werden mit der ebenfalls in Tabelle 1 angegebenen Menge der Polyisocyanatkomponente a) verarbeitet.

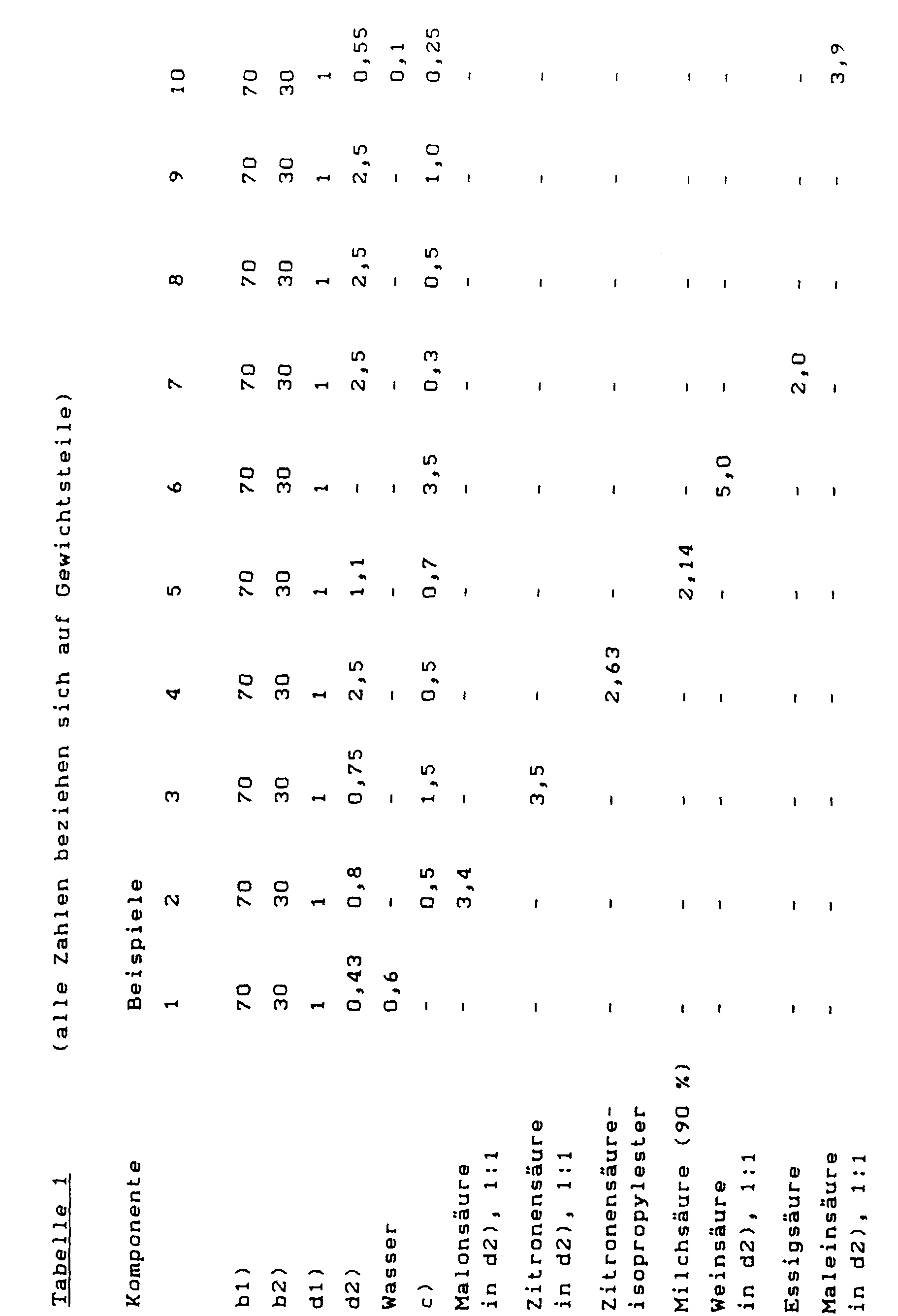

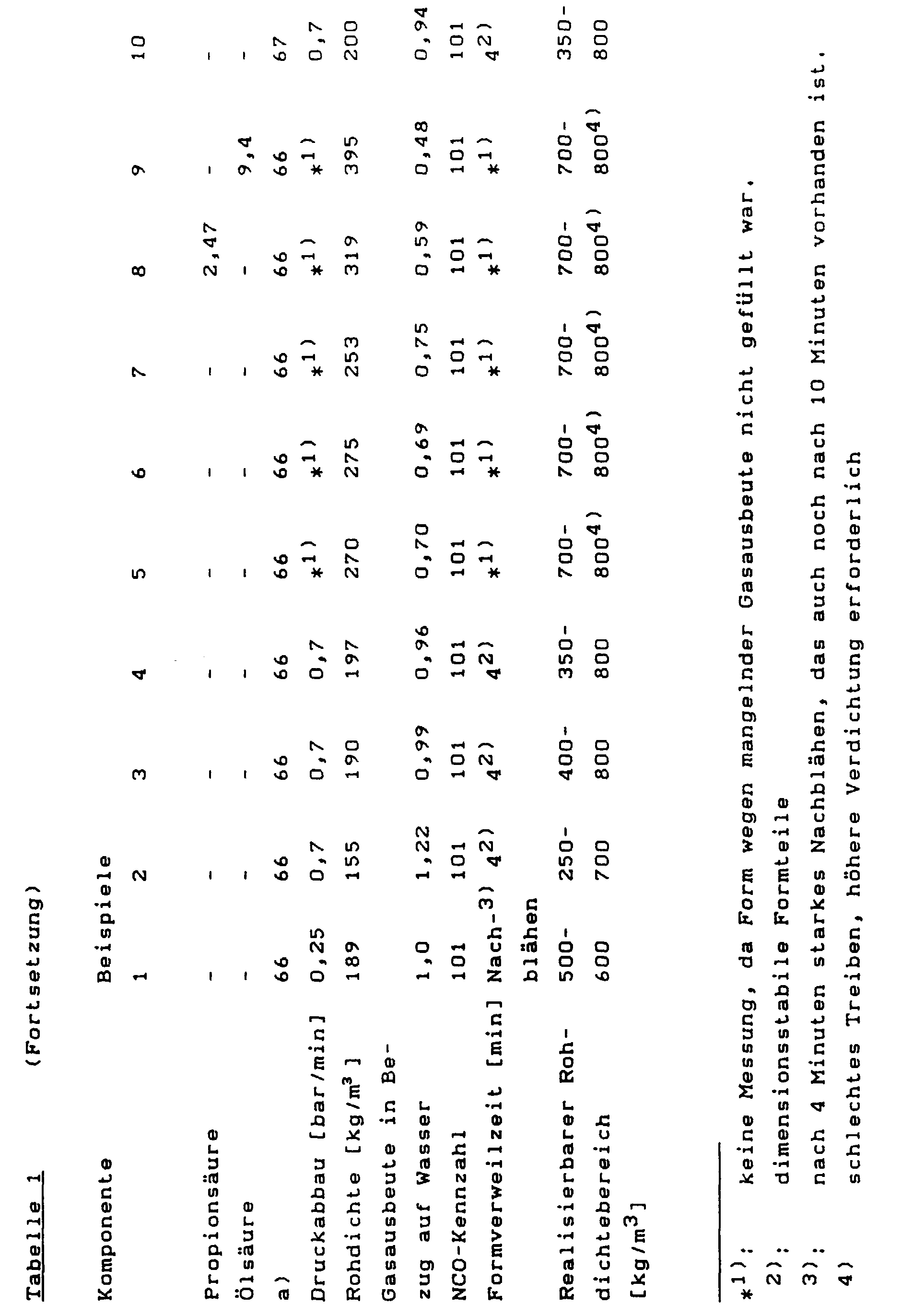

Unter Verwendung der in Tabelle 1 mitgeteilten Rezepturen wurden plattenförmige Schaumstoff-Formkörper hergestellt Als Formwerkzeug diente eine Plattenform der Abmessung 10 x 200 x 300 mm, deren Innenwände mit einem handelsüblichen äußeren Formtrennmittel auf Wachsbasis (®Acmosil 180, Hersteller: Acmos, Bremen) beschichtet worden waren.

Die Herstellung der Reaktionsgemische aus den Polyolmischungen und der Polyisocyanatkomponente a) erfolgte unter Verwendung einer üblichen Rührwerksmischvorrichtung.

Zur Beschreibung der Treibcharakteristik wurde die Gasausbeute nach Tabelle 1 in den nicht verdichteten Schaumstoffen anhand deren Rohdichte gemessen.

Die Versuche zeigen, daß bei halbharten bis weichen Schaumstoffen die Treibeigenschaften der erfindungsgemäß eingesetzten Treibmittel besser sind als der Stand der Technik. Bei harten Schaumstoffen mit kompakter Außenhaut sind die Treibeigenschaften und sonstigen Eigenschaften der erfindungsgemäß eingesetzten Treibmittel mindestens genauso gut wie der Stand der Technik.

Aus Tabelle 1 geht hervor, daß Malonsäure (Beispiel 2), Citronensäure (Beispiel 3) und Citronensäureisopropylester (Beispiel 4) als Treibmittel der Wirkung anderer Carbonsäuren deutlich überlegen sind und selbst Wasser in der Gasausbeute deutlich übertreffen können, wie Beispiel 2 im Vergleich zu Beispiel 1 zeigt. Weiterhin überraschend ist der schnelle Druckabbau in Formteilen, der sich in für Säuren enthaltende Systeme bemerkenswert kurzen Formverweilzeiten äußert. Hierzu wurde auf der Basis der in Tabelle 1 angeführten Rezepturen der Zeitpunkt der Dimensionsstabilität durch Entnahme aus der Form bestimmt, wobei zunächst die Rohdichte auf 670 kg/m³ eingestellt wurde. In den Beispielen 2 bis 4 und 10 sind die mit den erfindungsgemäßen Treibmitteln geschäumten Formkörper nach 4 Minuten glatt entformbar, während der Schaumkörper aus Beispiel 1 durch starkes Nachblähen aufplatzt.

Ein Optimieren der Katalyse in den Beispielen 2 bis 4 und 10 ermöglicht noch kürzere Formstandzeiten, da das Fließverhalten dies zuläßt. Einen außergewöhnlich niedrigen Viskositätsaufbau bewirkt die Malonsäure in Beispiel 2. Dies äußert sich auch in Mischungen mit anderen erfindungsgemäßen Treibmitteln.

Die Beispiele 2 bis 4 und 10 entsprechen in ihrem Druckabbau überraschend einem Vergleich, bei dem mit 15 Gew.-Teilen Monofluortrichlormethan als Treibmittel und 2,5 Gew.- Teilen Ethylenglykol bei sonst gleicher Rezeptur gearbeitet wurde und ein Abbau von 0,7 bar pro Minute erfolgte, während Beispiel 1 einen Abbau von 0,25 bar pro Minute zeigte. Die anderen Säuren (Beispiele 5 bis 9) sind wegen schlechter Gasausbeute nicht geeignet, da sie die vorgegebenen Volumen der Formteile nicht ausfüllen.

Auf Basis der Rezepturen 2 bis 4 wurden übliche Lenkradformen mit Stahlringeinlage mit den Reaktionsgemischen befüllt und nach 4 Minuten entformt. Die Lenkräder zeigten keine Fließstörungen und besaßen eine zellfreie Randzone.

## Patentansprüche

1. Verfahren zur Herstellung von Formkörpern einer Rohdichte von mindestens 150 kg/m³ aus Polyurethanschaumstoffen mit einer kompakten Oberfläche durch Formverschäumung eines Reaktionsgemisches aus
a) einer Polyisocyanatkomponente, bestehend aus mindestens einem aromatischen Polyisocyanat,
b) einer Reaktivkomponente, bestehend aus mindestens einer organischen Verbindung mit mindestens zwei gegenüber Isocyanatgruppen reaktionsfähigen Gruppen,
c) urethan- und harnstoffbildende Aktivatoren
d) gegebenenfalls weiteren Hilfs- und Zusatzmitteln
e) gegebenenfalls Wasser und
f) organischen Treibmitteln
unter Einhaltung einer Isocyanatkennzahl von 75 bis 200, dadurch gekennzeichnet, daß als Treibmittel f) Verbindungen der allgemeinen Formel I
HOOC-R-COOH I
wobei
R eine CH₂-Gruppe oder eine CH=CH-Gruppe darstellt, und/oder der Formel II 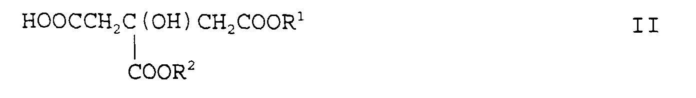
in welcher
R¹ und R² unabhängig voneinander einen Wasserstoffrest oder einen Alkylrest mit 1 bis 6 Kohlenstoffatomen darstellen, dessen Wasserstoffatome teilweise durch OH-Gruppen substituiert sein können,
eingesetzt werden sowie deren Salze.

2. Verfahren nach Anspruch 1, dadurch gekennzeichnet, daß als Treibmittel f) Malonsäure eingesetzt wird.

3. Verfahren nach Anspruch 1, dadurch gekennzeichnet, daß als Treibmittel f) Citronensäure eingesetzt wird.

4. Verfahren nach Anspruch 1, dadurch gekennzeichnet, daß als Treibmittel f) Citronensäurepropylester eingesetzt wird.

5. Verfahren nach Anspruch 1, dadurch gekennzeichnet, daß als Treibmittel f) Citronensäurehydroxypropylester eingesetzt wird.

6. Verfahren nach Anspruch 1, dadurch gekennzeichnet, daß als Treibmittel f) Maleinsäure eingesetzt wird.

7. Verfahren nach Anspruch 1, dadurch gekennzeichnet, daß als Treibmittel f) mindestens zwei Verbindungen aus der Gruppe, bestehend aus Malonsäure, Citronensäure, Maleinsäure, Citronensäurepropylester und Citronensäurehydroxypropylester, eingesetzt werden.

8. Verfahren nach Anspruch 1, dadurch gekennzeichnet, daß als Treibmittel f) Verbindungen der Formel II eingesetzt werden, in denen R¹ einen Alkylrest mit 1 bis 6 Kohlenstoffatomen, dessen Wasserstoffatome teilweise durch OH-Gruppen substituiert sein können, und R² einen Wasserstoffrest darstellen.

9. Verfahren nach einem der Ansprüche 1 bis 8, dadurch gekennzeichnet, daß das Treibmittel f) in Mengen von 0,1 bis 5,0 Gew.-Teilen, bezogen auf die Komponente b) eingesetzt wird.

10. Verfahren nach einem der Ansprüche 1 bis 9, dadurch gekennzeichnet, daß die Treibmittel I und II in Form ihrer Alkanolamin-Salze verwendet werden.

11. Verfahren nach Anspruch 1, dadurch gekennzeichnet, daß als weitere Hilfsmittel d) randzonenvergrößernde Zeolith-Typen und/oder Silikageltypen eingesetzt werden.

## Claims

1. A process for the production of polyurethane foam mouldings having a compact surface and a gross density of at least 150 kg/m³ by foaming a reaction mixture of
a) a polyisocyanate component consisting of at least one aromatic polyisocyanate,
b) a reactive component consisting of at least one organic compound having at least two groups reactive towards isocyanate groups,
c) urethane- and urea-forming activators,
d) optionally other auxiliaries and additives,
e) optionally water and
f) organic blowing agents
in moulds, an isocyanate index of 75 to 200 being maintained, characterized in that the blowing agents f) used are compounds of general formula I:
HOOC-R-COOH I
in which
R is a CH₂ group or a CH=CH group, and/or of formula II: 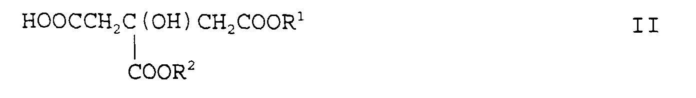
in which
R¹ and R² independently of one another are a hydrogen radical or an alkyl radical having 1 to 6 carbon atoms in which some of the hydrogen atoms may be replaced with OH groups,
and their salts.

2. A process according to Claim 1, characterized in that malonic acid is used as the blowing agent f).

3. A process according to Claim 1, characterized in that citric acid is used as the blowing agent f).

4. A process according to Claim 1, characterized in that propyl citrate is used as the blowing agent f).

5. A process according to Claim 1, characterized in that hydroxypropyl citrate is used as the blowing agent f).

6. A process according to Claim 1, characterized in that maleic acid is used as the blowing agent f).

7. A process according to Claim 1, characterized in that at least two compounds from the group consisting of malonic acid, citric acid, maleic acid, propyl citrate and hydroxypropyl citrate are used as the blowing agent f).

8. A process according to Claim 1, characterized in that compounds of formula II in which R¹ is an alkyl radical having 1 to 6 carbon atoms in which some of the hydrogen atoms may be replaced with OH groups, and R² is a hydrogen radical, are used as the blowing agent f).

9. A process according to one of Claims 1 to 8, characterized in that the blowing agent f) is used in amounts of 0.1 to 5.0 parts by weight, based on component b).

10. A process according to one of Claims 1 to 9, characterized in that the blowing agents I and II are used in the form of their alkanolamine salts.

11. A process according to Claim 1, characterized in that zeolites which enlarge the skin zone, and/or silica gels, are used as other auxiliaries d).

## Revendications

1. Procédé pour la fabrication de corps moulés possédant une masse volumique apparente d'au moins 150 kg/m³ à partir de mousses de polyuréthanne, présentant une surface compacte, par moussage in situ d'un mélange réactionnel constitué par
a) un composant de polyisocyanate constitué d'au moins un polyisocyanate aromatique,
b) un composant réactif constitué d'au moins un composé organique contenant au moins deux groupes aptes à réagir vis-à-vis de groupes isocyanate,
c) des activateurs formateurs de groupes uréthane et urée,
d) éventuellement d'autres adjuvants et additifs,
e) éventuellement de l'eau et
f) des agents moussants organiques.
en maintenant un indice d'isocyanate de 75 à 200, caractérisé en ce qu'on met en oeuvre comme agents moussants f) des composés répondant à la formule générale
HOOC-R-COOH I
dans laquelle
R représente un groupe CH₂ ou un groupe CH=CH, et/ou répondant à la formule II 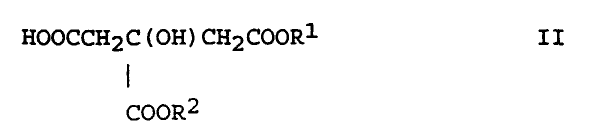
dans laquelle
R¹ et R² représentent indépendamment l'un de l'autre un radical hydrogène ou un radical alkyle contenant de 1 à 6 atomes de carbone, dont les atomes d'hydrogène peuvent être substitués en partie par des groupes OH,
ainsi que leurs sels.

2. Procédé selon la revendication 1, caractérisé en ce qu'on met en oeuvre comme agent moussant f) l'acide malonique.

3. Procédé selon la revendication 1, caractérisé en ce qu'on met en oeuvre comme agent moussant f) l'acide citrique.

4. Procédé selon la revendication 1, caractérisé en ce qu'on met en oeuvre comme agent moussant f) l'ester propylique de l'acide citrique.

5. Procédé selon la revendication 1, caractérisé en ce qu'on met en oeuvre comme agent moussant f) l'ester hydroxypropylique de l'acide citrique.

6. Procédé selon la revendication 1, caractérisé en ce qu'on met en oeuvre comme agent moussant f) l'acide maléique.

7. Procédé selon la revendication 1, caractérisé en ce qu'on met en oeuvre comme agent moussant f) au moins deux composés choisis parmi le groupe constitué par l'acide malonique, l'acide citrique, l'acide maléique, l'ester propylique de l'acide citrique et l'ester hydroxypropylique de l'acide citrique.

8. Procédé selon la revendication 1, caractérisé en ce qu'on met en oeuvre comme agent moussant f) des composés de formule II dans lesquels R¹ représente un radical alkyle contenant de 1 à 6 atomes de carbone dont les atomes d'hydrogène peuvent être substitués en partie par des groupes OH et R² représente un radical hydrogène.

9. Procédé selon une quelconque des revendications 1 à 8, caractérisé en ce qu'on met en oeuvre l'agent moussant f) dans des quantités de 0,1 à 5,0 parties en poids, rapportées au composant b).

10. Procédé selon une quelconque des revendications 1 à 9, caractérisé en ce qu'on utilise les agents moussants I et II sous forme de leurs sels d'alcanolamine.

11. Procédé selon la revendication 1, caractérisé en ce qu'on met en oeuvre comme adjuvant supplémentaire d), des types de zéolithe et/ou des types de Silicagel agrandissant les zones voisines des parois.
